# EUROPÄISCHE PATENTSCHRIFT

(11) **EP 1 941 329 B1**
(45) Veröffentlichungstag und Bekanntmachung des Hinweises auf die Patenterteilung: **12.06.2019**
(21) Anmeldenummer: 06806564.8
(22) Anmeldetag: 26.10.2006
(51) Int. Cl.: G05B 19/042

(54) **DATENBANKINTERFACE FÜR FELDGERÄT**
DATABASE INTERFACE FOR FIELD DEVICE
INTERFACE DE BASE DE DONNÉES POUR APPAREIL DE TERRAIN

(30) Priorität: 27.10.2005 US 730713 P; 27.10.2005 DE 102005051580
(43) Veröffentlichungstag der Anmeldung: 09.07.2008
(73) Patentinhaber: VEGA Grieshaber KG, 77709 Wolfach (DE)
(72) Erfinder: ISENMANN, Andreas, 77716 Haslach i. K. (DE); FAIST, Fridolin, 77709 Oberwolfach (DE); SCHÄTZLE, Ralf, 77716 Fischerbach (DE)
(74) Vertreter: Maiwald Patent- und Rechtsanwaltsgesellschaft mbH
(86) Internationale Anmeldenummer: PCT/EP2006/010334
(87) Internationale Veröffentlichungsnummer: WO 2007/048608

(56) Entgegenhaltungen:
- WO-A-03/038533
- WO-A2-03/040882
- WO-A2-03/054645
- US-A1- 2004 255 017
- KAPSALIS V ET AL: "Seamless integration of distributed real time monitoring and control applications utilising emerging technologies" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 176-181, XP010573507 ISBN: 0-7803-7108-9
- STEINFELD E F: "INTERNET-APPLIANCE TECHNOLOGY AUTOMATES TEST EQUIPMENT" EDN ELECTRICAL DESIGN NEWS, REED BUSINESS INFORMATION, HIGHLANDS RANCH, CO, US, Bd. 45, Nr. 21, 12. Oktober 2000 (2000-10-12), Seiten 157-158,160,16, XP001143050 ISSN: 0012-7515
- HAMRITA T K ET AL: "Advances in smart sensor technology" INDUSTRY APPLICATIONS CONFERENCE, 2005. FOURTIETH IAS ANNUAL MEETING. CONFERENCE RECORD OF THE 2005 HONG KONG, CHINA 2-6 OCT. 2005, PISCATAWAY, NJ, USA,IEEE, 2. Oktober 2005 (2005-10-02), Seiten 2059-2062, XP010842679 ISBN: 0-7803-9208-6
- INTERNET ARTICLE, 25 September 2005 (2005-09-25), Retrieved from the Internet: URL:https://web.archive.org/web/2005092501 2528/http://jmarshall.com/easy/http/ [retrieved on 2016-03-31]
- KONSTANTAS D. ET AL: "Mobile Patient Monitoring", Inet INTERNET ARTICLE, 1 January 2004 (2004-01-01), Retrieved from the Internet: URL:http://www.qol.unige.ch/publications/N CC_2004.pdf [retrieved on 2016-08-31]

## Beschreibung

Die vorliegende Anmeldung beansprucht die Priorität der US Provisional Patentanmeldung Nr. 60/730,713, eingereicht am 27. Oktober 2005 und der deutschen Patentanmeldung Nr. 10 2005 051 580.0, eingereicht am 27. Oktober 2005.

Die vorliegende Erfindung betrifft im Allgemeinen das technische Gebiet der Messtechnik. Insbesondere betrifft die vorliegende Erfindung ein Kommunikationsmodul für ein Messgerät, eine Datenbank, ein Messwerterfassungssystem, eine Verfahren zur Verarbeitung von Messwerten und eine Messgeräteanordnung.

Bei der Erfassung von Messwerten kommt es sehr häufig darauf an, Messwerte unterschiedlicher Prozessgrößen miteinander in Verbindung zu setzen, um darauf basierend Auswertungen zu erhalten. Dabei kommt es des öfteren vor, dass Messwerte an unterschiedlichen und oft sehr weit auseinander liegenden Orten aufgenommen werden müssen und an einen zentralen Ort zur Speicherung transportiert werden müssen. Der Einsatz einer zentralen Speicherung ermöglicht es beispielsweise ein einheitliches Datensicherungskonzept für unterschiedliche Messwerte einzusetzen. Es ist außerdem möglich, nur eine Auswerteinfrastruktur zur Verfügung zu stellen, um die unterschiedlichsten Messergebnisse zu verarbeiten.

Die Wandlung der physikalischen Prozessinformationen in Messwerte, die von elektronischen Datenverarbeitungsgeräten ausgewertet werden können, findet meist am Ort der Messung statt. Die Feldgeräte wandeln die physikalischen Prozessinformationen in Zahlenwerte, die schließlich zu den zentralen Auswerteeinrichtungen weitergeleitet werden müssen.

Das Übertragen von Prozessinformationen von Feldgeräten in eine zentrale Datenbank einer Auswerteeinrichtung findet heute beispielsweise über Wählverbindungen, in Feldgeräte integrierte Webserver, per E-Mail, SMS oder über einen Faxversand statt. Bei all diesen Verfahren müssen, um an die Messinformationen zu kommen, Informationen von einem Empfänger aktiv abgerufen werden. Das bedeutet, dass die Messwerte an einer vereinbarten Stelle von dem Feldgerät bereitgestellt werden, von der sie dann von dem Benutzer, insbesondere einer weiterverarbeitenden Instanz, abgeholt werden müssen.

Die Druckschrift XP010573507, Kapsalis V et. Al., "Seamless integration of distributed real time monitoring and control applications utilizing emerging technologies", IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001;[ANNUAL CONFERENCE OF THE IEEE INDUSTRIAL ELECTRONICS SOCIETY],;20011129;20011129 - 20011202;NEW YORK, NY : IEEE, US - ISBN 978-0-7803-7108-8 ; ISBN 0-7803-7108-9, beschreibt die nahtlose Integration eines verteilten Real-Time Monitorens und Steueranwendungen unter Verwenden von neu aufkommenden Technologien, wobei einem Webbrowser Aktive Server Seiten zugeführt werden, welcher eine Abfrage initiiert hat.

Die Internetveröffentlichung "HTTP Made Really Easy", Marshall, 25.09.2005 (Copyright 1997), URL:https://web.archive.org/web/20050925012528/http://jmarshall.com/easy/http/ beschreibt, wie Daten mittels HTTP übertragen werden können.

Dokument WO 03/054645 A2 beschreibt ein Verfahren zum Datenaustausch zwischen einem Feldgerät und einem Steuergerät via Internet, Modem und öffentlichem Telefonnetz, wobei nach dem Einwählvorgang des Modems beim Internet-Service-Provider über das öffentliche Telefonnetz die aktuelle IP-Adresse des Modems an einen Verteiler-Server übertragen wird. Feldgeräte-Anfragen vom Steuergerät auf eine permanente Adresse des Feldgerätes werden über die aktuelle IP-Adresse an das Feldgerät weitergeleitet.

Zur Erleichterung der Abholung können zwar Pollverfahren eingesetzt werden, die dafür sorgen, dass die bereitgestellten Informationen in regelmäßigen zeitlichen Abständen abgefragt und abgeholt werden. Allerdings ist es mit diesen Pollverfahren bzw. mit durch den User getriggerten Abholverfahren schwer möglich, Informationen abzuholen, unmittelbar nachdem sie erfasst wurden. Es kann gerade bei einer unregelmäßigen Messwerterfassung dazu kommen, dass der zeitliche Abstand zwischen der Abfrage und dem Bereitstellen eines Messwertes sehr groß ist. Oder es kann vorkommen, dass in zu kurzen Intervallen abgefragt wird, so dass das Messsystem durch die häufige Abfrage zusätzlich belastet und in seiner Performance beeinträchtigt wird.

Es ist eine Aufgabe der vorliegenden Erfindung eine bessere Messwertbereitstellung anzugeben.

Demgemäß wird ein Kommunikationsmodul für ein Messgerät, eine Datenbank, ein Messwerterfassungssystem, ein Verfahren zur Verarbeitung von Messwerten und eine Messgeräteanordnung mit einem Messgerät und einem Kommunikationsmodul mit den Merkmalen gemäß den unabhängigen Patentansprüchen angegeben.

Gemäß einem Ausführungsbeispiel der vorliegenden Erfindung wird ein Kommunikationsmodul für ein Messgerät mit einem ersten und einem zweiten Interface und einem Webclient angegeben. An dem ersten Interface kann ein Messgerät angeschlossen werden. Über das zweite Interface kann eine Verbindung zwischen dem Kommunikationsmodul und einer Datenbank hergestellt werden.

Das Kommunikationsmodul ist derart ausgebildet, dass es einen an dem ersten Interface empfangenen Messwert mittels eines Webclients an das zweite Interface weiterleitet und dort bereitstellt.

Ein Webclient ist eine Applikation, die mit einem Webserver kommuniziert. Meist verwendet ein Webclient für die Kommunikation mit einem Webserver das sog. Hypertext Transfer Protokoll (HTTP). Im Zusammenhang dieses Textes soll unter einem Webclient auch ein Prozess zu verstehen sein, der als eigenständige Einheit oder integriert in einem Gesamtsystem auf einem Prozessor ausgeführt wird und die Kommunikation zwischen zwei Systemen steuert. Die Steuerinformation für das Verhalten des Webclients wird einer gespeicherten Software entnommen.

Der Webclient kann nach der Durchführung einer Messung erkennen, dass ein gültiger Messwert vorliegt. Er kann den Messwert, der über das erste Interface des Kommunikationsmoduls bereitgestellt wird, nach einer internen Verarbeitung des Messwerts auf dem Kommunikationsmodul an eine Datenbank über das zweite Interface bereitstellen. Der Messwert bzw. weitere Informationen, die mit der Messung in Verbindung stehen, beispielsweise Adressenidentifikationsnummern des Messgerätes, die Uhrzeit der Messung oder die Dauer einer Messung, können dabei direkt in die Datenbank bzw. in eine Speichereinrichtung der Datenbank übertragen werden.

Durch die Verwendung eines Webclients und den damit zur Verfügung stehenden Bestätigungsmechanismen für eine Datenübertragung kann der Erfolg einer Messwertübertragung überwacht werden und im Fehlerfall kann von dem Kommunikationsmodul entsprechend reagiert werden. Beispielsweise könnte bei einem Fehler durch eine fehlerhafte Übertragung, die durch Übertragungsstörungen verursacht sein kann, eine Wiederholung der Sendung der Information durchgeführt werden.

Gemäß einem weiteren Ausführungsbeispiel der vorliegenden Erfindung wird eine Datenbank mit einem Interface und einem Server angegeben. Das Interface der Datenbank ist dabei derart ausgebildet, dass es zum Anschluss bzw. zur Kommunikation mit einem Webclient geeignet ist. Die Datenbank kann einen Messwert, der von dem Kommunikationsmodul, insbesondere von dem auf dem Kommunikationsmodul integrierten Webclient, versendet wird, empfangen.

In anderen Worten bedeutet das, dass das Interface der Datenbank an ein Interface des Kommunikationsmoduls angepasst ist, um eine von dem Kommunikationsmodul versendete Information empfangen zu können. Die Anpassung bedeutet in diesem Zusammenhang nicht nur eine physikalische Anpassung der Interfaces und insbesondere der Schnittstellen der Datenbank und des Kommunikationsmoduls aneinander, sondern die Anpassung betrifft auch die Möglichkeit Informationen, die von dem Kommunikationsmodul verschickt werden, zu interpretieren und zu extrahieren. Davon ist die Interpretation der Informationen betroffen, die meist auf einer höheren Schnittstellen- oder Protokollschicht stattfindet.

Auf dem Kommunikationsmodul und der Datenbank erfolgen für die Kommunikation dem Versenden entgegengesetzte Prozessschritte. Während das Kommunikationsmodul nach einer vorgegebenen Regel Nachrichten, insbesondere Messwerte in eine zur Übertragung geeignete Form einpackt, kann die Datenbank, insbesondere ein Server, diese Information nach den entsprechenden Regeln wiederum extrahieren. So kann eine Kommunikation in Richtung Kommunikationsmodul zur Datenbank aber auch in umgekehrter Richtung erfolgen.

Zur Kommunikation der Datenbank in Richtung Kommunikationsmodul kann ein Server der Datenbank die Rolle des Einpackens einer Nachricht und des Verschickens der Nachricht übernehmen, während der Webclient auf dem Kommunikationsmodul die empfangene Nachricht entpackt. Die Regeln, nach denen die Kommunikation zwischen Kommunikationsmodul und Datenbank erfolgt, können in aufeinander abgestimmten Skripten oder Programmen hinterlegt sein.

Gemäß einem weiteren Ausführungsbeispiel der vorliegenden Erfindung wird ein Messwerterfassungssystem mit mindestens einem Kommunikationsmodul und mindestens einer Datenbank angegeben. Das Messwerterfassungssystem ist derart ausgebildet, dass das Kommunikationsmodul der Datenbank mittels eines Webclients Messwerte bereitstellt.

Mittels eines Messwerterfassungssystems kann eine sichere bzw. fehlertolerante Übertragung von Informationen zwischen Kommunikationsmodul und Datenbank erreicht werden.

Über den Webclient können das Kommunikationsmodul und die Datenbank in Verbindung stehen. Dadurch lässt sich eine sichere Übertragung von Messwerten zwischen Kommunikationsmodul und Datenbank realisieren und die Schnittstelle zwischen Kommunikationsmodul und Datenbank lässt sich flexibel an neue Anforderungen anpassen.

Gemäß einem weiteren Ausführungsbeispiel der vorliegenden Erfindung wird ein Verfahren zur Verarbeitung von Messwerten mittels eines Kommunikationsmoduls angegeben. Zur Durchführung des Verfahrens wird an einem ersten Interface ein Messwert empfangen und dieser mittels eines Webclients an mindestens ein zweites Interface weitergeleitet.

Weitere Ausgestaltungen des Verfahrens ergeben sich aus den Ausgestaltungen des Kommunikationsmoduls und der Datenbank.

Gemäß einem weiteren Ausführungsbeispiel der vorliegenden Erfindung wird eine Messgeräteanordnung angegeben. Die Messgeräteanordnung weist ein Messgerät zum Erfassen von mindestens einem Messwert auf. Außerdem weist die Messgeräteanordnung ein Kommunikationsmodul auf, dem an dem ersten Interface mindestens ein Messwert zuführbar ist.

Die Messgeräteanordnung mit einem Kommunikationsmodul kann einen direkten Zugriff auf Messwerte eines Messgeräts ermöglichen. Oftmals kann es nötig sein, zwischen einem Messgerät, das einen Messwert erfassen kann, und beispielsweise einer Auswerteeinheit, die den erfassten Messwert aufbereiten kann, ein Bussysteme zur Kommunikation zwischen Messgerät und Auswerteeinheit einzusetzen. Dazu kann es nötig sein, dass der Messwert in ein spezielles Bussignal umgewandelt werden muss. Weist eine Messgeräteanordnung das Messgerät und das Kommunikationsmodul auf, kann das Kommunikationsmodul ohne Zwischenumwandlung über einen Bus auf die Messwerte des Messgerätes direkt zugreifen. Das Kommunikationsmodul kann in der Messgeräteanordnung integriert sein oder beispielsweise mittels eines Schraubverschlusses integrierbar sein. Auf diese Art und Weise können auch vorhandene Messgeräte erweitert und nachgerüstet werden.

Gemäß einem weiteren Ausführungsbeispiel der vorliegenden Erfindung wird ein Kommunikationsmodul angegeben, bei dem das erste Interface ein Messgerät-internes Interface ist.

Mit einem Messgerät-intemen Interface kann das Kommunikationsmodul direkt auf von dem Messgerät bzw. einer Messeinheit zur Verfügung gestellte Messsignale zugreifen. Es kann damit vermieden werden, dass die Signale in ein weiteres Übertragungsformat gewandelt werden müssen. Die Umwandlung könnte beispielsweise nötig sein, um ein von dem Kommunikationsmodul weit entferntes Messgerät mit dem Kommunikationsmodul zu verbinden. Es könnte dazu nötig sein, das entfernte Messgerät beispielsweise über ein Busprotokoll, wie das HART® Busprotokoll, anzuschließen. Durch die Bereitstellung eines Messgerät-internen Interface muss nicht auf ein Standardprotokoll zur Übertragung zurückgegriffen werden.

Gemäß einem weiteren Ausführungsbeispiel der vorliegenden Erfindung wird ein Kommunikationsmodul angegeben, wobei das erste Interface ausgewählt aus der Gruppe bestehend aus I2C, HART®, Profibus, Fieldbus Foundation™ und VEGA VBUS ist.

Wenn das erste Interface einem Standardmesswertübertragungsprotokoll entspricht, können unterschiedliche Messgeräte mit dem Kommunikationsmodul verbunden werden. Es könnte beispielsweise nötig sein, Standardmesswertübertragungsprotokolle für das erste Interface zu verwenden, um Messgeräte von verschiedenen Herstellern an das Kommunikationsmodul anzuschließen. Im Zusammenhang des vorliegenden Dokumentes soll ein Interface sich nicht nur auf einen physikalischen Stecker beziehen, sondern soll auch das über die physikalische Verbindung laufende Protokoll einschließen. Darin inbegriffen soll auch die Verwendung beispielsweise eines Skriptes sein.

Gemäß einem weiteren Ausführungsbeispiel der vorliegenden Erfindung wird ein Kommunikationsmodul angegeben, bei dem das zweite Interface in einer Skript-Sprache verfasst ist. Davon betroffen können höhere Schichten eines Übertragungsprotokolls bzw. eines Interfaces sein. Die Beschreibung eines Interfaces über eine Skript-Sprache kann eine flexible Anpassung an einen Kommunikationspartner des Kommunikationsmoduls ermöglichen. Das Kommunikationsmodul kann beispielsweise zur Kommunikation mit einer Datenbank bestimmte Informationen bereitstellen müssen. Die Anforderung der Art, Reihenfolge und Anzahl der zu übertragenden Informationen kann sich ändern. Durch die Verwendung bzw. Beschreibung eines Interfaces mittels eines Skriptes, das auf das Kommunikationsmodul ladbar ist und beispielsweise von dem Webclient des Kommunikationsmoduls ausführbar ist, kann eine flexible Anpassung an die Datenbank ermöglicht werden.

Das zweite Interface des Kommunikationsmoduls kann beispielsweise ein Standardhttp Interface sein, das die zu übertragenden Daten als URI (Uniform Resource Identifier) in Form einer einzigen Befehlszeile beim http-Verbindungsaufbau übergibt. In einer solchen Befehlszeile können verschiedene Parameter, wie beispielsweise die Uhrzeit der Messung, eine Seriennummer oder ein Messwert kodiert sein. Das Verfassen des zweiten Interfaces in eine Skript-Sprache kann also die Regel für den Webclient sein, nach der eine Hypertexttransferprotokollzeile von dem Webclient ausgebaut werden soll und an einen Kommunikationspartner übertragen werden soll. Aufrufe in HTTP können von heute üblichen Netzwerken ohne Anpassung verarbeitet und verstanden werden.

Gemäß einem weiteren Ausführungsbeispiel der vorliegenden Erfindung wird ein Kommunikationsmodul angegeben, wobei das Kommunikationsmodul an die Datenbank über ein Kommunikationsmedium anschließbar ist. Ein Kommunikationsmedium kann ein Telefonnetz, eine Direkt-Verbindung oder auch das Internet sein. Abhängig von der jeweils gewählten Kommunikationsverbindung können unterschiedliche Übertragungsgeräte zum Einsatz kommen. Eine Direkt-Verbindung kann beispielsweise mittels eines Nullmodems bzw. allgemein eines Cross-Over-Kabels für den RJ 45 oder RS 232 Standard sein. Soll das Kommunikationsmodul an ein Telefonnetz angeschlossen werden, so können Modems zur digitalen Signalübertragung nötig sein. Soll das Kommunikationsmedium an das Internet angeschlossen werden, wird meist eine TCP/IP Socket Software zum Einsatz kommen.

Gemäß einem weiteren Ausführungsbeispiel der vorliegenden Erfindung wird ein Kommunikationsmodul angegeben, das ausgebildet ist, den Messwert ereignisgesteuert weiterzuleiten.

Eine Ereignissteuerung kann vielfältig ausgestaltet sein. Beispiele für eine Ereignissteuerung sind die Bereitstellung eines Messwertes zu einer bestimmten Uhrzeit, an einem bestimmten Tag oder innerhalb eines bestimmten Intervalls. Ereignisse, die eine Ereignissteuerung auslösen können, können aber auch beispielsweise Messfehler sein oder das Vorliegen eines Messwertes nach Abschluss einer Messung. Auch das Unter- oder Überschreiten eines bestimmten Messwertes kann die Ereignissteuerung auslösen.

Gemäß einem weiteren Ausführungsbeispiel der vorliegenden Erfindung wird ein Kommunikationsmodul angegeben, wobei der Webclient als Softwaremodul ausgestaltet ist. Die Ausgestaltung eines Webclients als Softwaremodul kann es ermöglichen, dass während der Lebenszeit des Kommunikationsmoduls Verbesserungen an der Software des Webclients vorgenommen und auch eingespielt werden können. Dadurch kann der Webclient an neue Softwareversionen angepasst werden, ohne das gesamte Kommunikationsmodul austauschen zu müssen.

Gemäß einem weiteren Ausführungsbeispiel der vorliegenden Erfindung wird eine Datenbank angegeben, wobei die Datenbank zum Speichern von empfangenen Messwerten ausgebildet ist.

Das Speichern von Messwerten kann es ermöglichen, Messreihen durchzuführen, bei denen es darauf ankommen kann, dass zeitlich aneinander gereihte Messwerte verglichen bzw. ausgewertet werden sollen. Diese Werte lassen sich aus einem Speicher einer Datenbank jederzeit nach der Messung abrufen.

Gemäß einem weiteren Ausführungsbeispiel der vorliegenden Erfindung wird eine Datenbank angegeben, wobei die Datenbank zum Anschluss an ein Kommunikationsmodul ausgestaltet ist. Die Anpassung an das Kommunikationsmodul kann einen Datenaustausch von Messwerten zwischen Kommunikationsmodul und Datenbank ermöglichen. Es können somit die Funktionen eines Messsystems auf verschiedene Einheiten verteilt werden. Das Kommunikationsmodul kann für eine Übertragung der Messwerte optimiert werden, während beispielsweise die Datenbank für die Speicherung der Daten optimiert werden kann.

Gemäß einem weiteren Ausführungsbeispiel der vorliegenden Erfindung wird eine Datenbank angegeben, wobei die Datenbank eine Anzeigeeinrichtung, die ausgebildet ist den Messwert anzuzeigen, aufweist. Mittels der Anzeigeeinrichtung lassen sich gespeicherte Messwerte aus der Datenbank, insbesondere aus einer Speichereinrichtung einer Datenbank abrufen, visualisieren und ggf. nach vorgegebenen Regeln auswerten.

Gemäß einem weiteren Ausführungsbeispiel der vorliegenden Erfindung wird eine Datenbank angegeben, wobei das Interface der Datenbank in einer Skript-Sprache verfasst ist. Die Verfassung des Interfaces in einer Skript-Sprache kann es ermöglichen, flexibel die Kommunikation mit einem Kommunikationsmodul an ggf. neu auftretende Anforderungen anzupassen. Es könnte beispielsweise nötig sein, für die Speicherung neue bzw. andere Parameter von Messwerten zu speichern, wodurch die zu übertragende Information zwischen Kommunikationsmodul und Datenbank erweitert werden müsste. Mittels einer in einer Skript-Sprache verfassten höheren Schicht eines Interfaces lässt sich auf Veränderungen bzw. neue Anforderungen bei der Übertragung von Messwerten reagieren.

Gemäß einem weiteren Ausführungsbeispiel der vorliegenden Erfindung wird eine Datenbank angegeben, wobei die Datenbank mit dem Kommunikationsmodul über ein Kommunikationsmedium, ausgewählt aus der Gruppe bestehend aus Internet, Telefonnetz und Direkt-Verbindung, anschließbar ist.

Das Kommunikationsmodul und die Datenbank können örtlich verteilt sein. Die Verwendung eines Kommunikationsmediums zwischen Kommunikationsmodul und Datenbank kann insbesondere bei der Verwendung als zentraler Datenerfassung in einem örtlich weit auseinander liegenden Messszenario, wie es beispielsweise auf einem großen Fabrikgelände vorkommen kann, vorteilhaft eingesetzt werden.

Im Folgenden werden vorteilhafte Ausführungsbeispiele der vorliegenden Erfindung mit Verweis auf die Figuren beschrieben:
Fig. 1 zeigt ein Blockdiagramm eines Kommunikationsmoduls gemäß einem Ausführungsbeispiel der vorliegenden Erfindung.
Fig. 2 zeigt eine schematische Darstellung eines Messgeräts mit einem integrierten Kommunikationsmodul gemäß einem Ausführungsbeispiel der vorliegenden Erfindung.
Fig. 3 zeigt die schematische Darstellung eines Messwerterfassungssystems gemäß einem Ausführungsbeispiel der vorliegenden Erfindung.
Fig. 4 zeigt die schematische Darstellung einer Verbindung eines Kommunikationsmoduls mit einer Datenbank gemäß einem Ausführungsbeispiel der vorliegenden Erfindung.
Fig. 5 zeigt eine Eingabemaske für ein Skriptinterface zur Übertragung von Informationen mittels eines Webclients gemäß einem Ausführungsbeispiel der vorliegenden Erfindung.
Fig. 6 zeigt ein Initialisierungsskript für einen Skriptfall gemäß einem Ausführungsbeispiel der vorliegenden Erfindung.
Fig. 7 zeigt ein Datenbankinterface in einer Skript-Sprache gemäß einem Ausführungsbeispiel der vorliegenden Erfindung.
Fig. 8 zeigt ein Flussdiagramm zu dem Skript aus Fig. 7 gemäß einem Ausführungsbeispiel der vorliegenden Erfindung.
Fig. 9 zeigt ein Skript zur Abfrage einer Datenbank gemäß einem Ausführungsbeispiel der vorliegenden Erfindung.
Fig. 10 zeigt ein Flussdiagramm zu dem Skript aus Fig. 9 gemäß einem Ausführungsbeispiel der vorliegenden Erfindung.

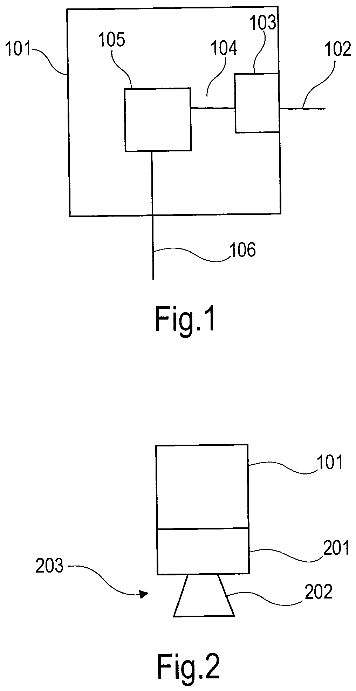

Die Darstellung in den Figuren sind schematisch und nicht maßstäblich. In der folgenden Beschreibung der Fig. 1 bis Fig. 10 werden die gleichen Bezugsziffern für gleiche oder sich entsprechende Elemente verwendet.

Fig. 1 zeigt ein Blockdiagramm eines Kommunikationsmoduls gemäß einem Ausführungsbeispiel der vorliegenden Erfindung. Das Kommunikationsmodul 101 weist eine Messwertverarbeitungseinrichtung 105 und einen Webclient 103 auf. Die Messwertverarbeitungseinrichtung 105 ist mittels erstem Interface 106 an ein Messgerät anschließbar. Dazu entspricht das erste Interface 106 beispielsweise einem Busprotokoll, wie dem I²C, HART®, Profibus, Fieldbus Foundation™ oder VEGA VBUS. Somit lässt sich über das erste Interface 106 eine Verbindung zu einem beliebigen Messgerät, das einen entsprechenden Bus aufweist, herstellen.

Das Messgerät kann abgesetzt von dem Kommunikationsmodul 101 angeordnet sein und ist folglich in der Fig. 1 nicht dargestellt. Die Kommunikation zwischen Kommunikationsmodul 101 und einem Messgerät erfolgt über die erste Schnittstelle 106. Die Messwerte des Messgerätes gelangen dabei in die Messwertverarbeitungseinrichtung 105 des Kommunikationsmoduls 101.

In der Messwertverarbeitungseinrichtung 105 werden die empfangenen Messwerte für eine Übertragung vorbereitet. D. h. es findet eine Formatanpassung bzw. eine Auswertung der Messwerte statt. Über die interne Verbindung 104, die die Messwertverarbeitungseinrichtung 105 und den Webclient 103 verbindet, werden die aufbereiteten Messdaten bzw. die zu übertragenden Daten an den Webclient 103 weitergeleitet. Der Webclient 103 befindet sich in der Nähe des Interface 102, mit dem der Webclient 103 verbunden ist.

Innerhalb des Webclients 103 findet eine weitere Aufbereitung der Daten in ein über das Kommunikationsmedium übertragbares Datenformat statt. Dazu werden die Daten beispielsweise in ein Skriptformat, in ein von einem Skript lesbares Format bzw. in eine Hypertext Transfer Protokoll-Syntax umgesetzt. Der Webclient 103 ist mit dem zweiten Interface 102 des Kommunikationsmoduls 101 verbunden und kann die in Skriptform aufbereiteten Daten über das zweite Interface 102 einer anderen Anwendung zur Verfügung stellen.

In der Fig. 1 ist eine solche Anwendung nicht gezeichnet. Es kann sich bei einer solchen Anwendung aber beispielsweise um eine Datenbank mit einem entsprechend angepassten Interface handeln. Das Interface der Datenbank sollte dabei mit dem zweiten Interface 102 direkt oder über ein Kommunikationsmedium in Verbindung stehen und das von dem Webclient aufbereitete Nachrichtenformat verstehen.

Die Speicher-Anwendung kann sich entfernt von dem Kommunikationsmodul 101 befinden. Um dennoch mit der Anwendung kommunizieren zu können, wird das zweite Interface 102 nicht direkt mit der Anwendung verbunden, sondern wird an ein Kommunikationsmedium angeschlossen. Bei einem Kommunikationsmedium kann es sich beispielsweise um ein Telefonnetz, eine Direkt-Verbindung oder das Internet handeln. Über ein solches Kommunikationsmedium kann eine örtlich entfernte Kommunikation zwischen einer Datenbank und dem Kommunikationsmodul 101 stattfinden.

Fig. 2 zeigt eine schematische Darstellung einer Messgeräteanordnung, d.h. eines Messgeräts mit einem integrierten Kommunikationsmodul gemäß einem Ausführungsbeispiel der vorliegenden Erfindung. In der Fig. 2 ist das Kommunikationsmodul 101 direkt mit der Messeinrichtung 201 eines Messgeräts oder Sensors 203 verbunden. Die Messeinrichtung 201 und die Fühlereinrichtung 202 bilden zusammen das Messgerät 203, den Sensor 203 oder das Feldgerät 203.

Die physikalische integrierende Verbindung zwischen Kommunikationsmodul 101 und Sensor 203 kann beispielsweise über eine Schraubverbindung hergestellt sein, wobei das Kommunikationsmodul 101 und die Messeinrichtung 201 jeweils ein angepasstes Gewinde aufweisen. Die Kommunikations-Verbindung zwischen Kommunikationsmodul 101 und Sensor 203 kann mittels des zweiten Interfaces des Kommunikationsmoduls 101 (in der Fig. 2 nicht gezeichnet) erfolgen. Das Kommunikationsmodul 101 kann direkt von der Messeinrichtung 201 einen Messwert abgreifen. Der Messwert, der auf der Messeinrichtung 201 zur Verfügung gestellt wird, ist ein aufbereiteter Wert einer mittels der Fühlereinrichtung 202 gemessenen physikalischen Prozessgröße.

Durch die direkte Verbindung des Messgeräts 203, beispielsweise eines Füllstands- oder Druckmessgerätes, kann ein Messgerät 203, das kein Kommunikationsmodul aufweist, mit einem Kommunikationsmodul 101 nachgerüstet und an eine Datenbank anschließbar gemacht werden.

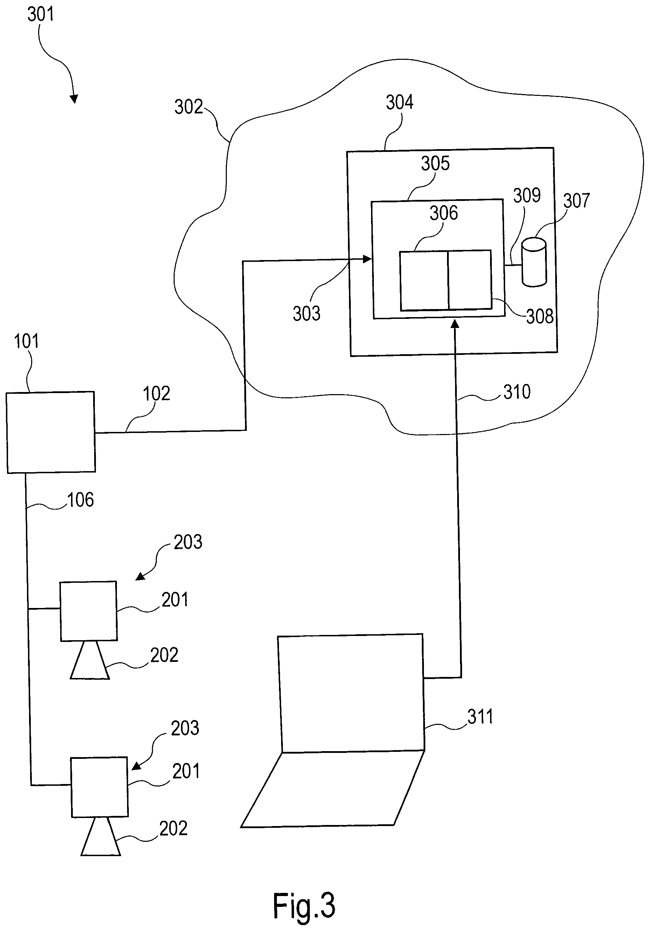

Fig. 3 zeigt die schematische Darstellung eines Messwerterfassungssystems gemäß einem Ausführungsbeispiel der vorliegenden Erfindung. Das Messwerterfassungssystem 301 weist ein Kommunikationsmodul 101 und eine Datenbank 304 auf. Das Kommunikationsmodul 101 ist über das zweite Interface 102 des Kommunikationsmoduls 101 mit dem Interface 303 der Datenbank 304 verbunden. Die Übertragung findet über ein Kommunikationsmedium 302, wie beispielsweise dem Internet, einem Intranet, dem Telefonnetz oder einer Direkt-Verbindung, statt. Als physikalische Verbindung mit dem Kommunikationsmedium 302 können für die beiden Interface 102 und 303 beispielsweise eine RS232-Verbindung, eine Modemverbindung oder eine Ethernet-Verbindung eingesetzt werden.

Messwerte werden von den zwei Messgeräten 203, die aus einer Fühlereinrichtung 202 und einer Messeinrichtung 201 bestehen, geliefert. Die Messgeräte 203 sind über ein erstes Interface 106 mit dem Kommunikationsmodul 101 verbunden. Sie liefern ihre ermittelten Prozessgrößen über das erste Interface 106 an das Kommunikationsmodul 101. Das erste Interface 106 kann beispielsweise ein HART®, Profibus, Fieldbus Foundation™ oder VEGA VBUS sein. Die Kommunikation der Messwerte von den Messgeräten 203 an das Kommunikationsmodul 101 kann unabhängig von einer anderen Kommunikationsbeziehung, beispielsweise der Kommunikation des Kommunikationsmoduls 101 mit der Datenbank 304 stattfinden.

Anstelle eines Messgeräts 203 kann auch ein Auswertgerät 203 an ein Kommunikationsmodul 101 angeschlossen werden. Ein solches Auswertgerät ist beispielsweise als VEGALOG 571, VEGAMET 515 oder VEGAMET 624 der Firma VEGA erhältlich. Die Aufgabe eines Auswertgeräts besteht allgemein darin, analoge Messgeräte oder Sensoren an ein digitales dezentrales Auswertsystem anzuschließen. Das Auswertsystem kann beispielsweise die Datenbank 304 samt zugehöriger Server 305 sein.

Die analogen Sensoren weisen keine digitalen Schnittstellen auf und sind daher zunächst nicht direkt an ein digitales Bussystem anschließbar. Allerdings können Sensoren mit einer analogen Schnittstelle an dem Auswertgerät angeschlossen werden. Das Auswertgerät sammelt die analogen Daten der analogen Messgeräte bzw. der analogen Sensoren ein und wandelt sie in digitale Signale, die über das digitale Bussystem 102 oder 106 beispielsweise an eine Datenbank verteilt werden. Das Auswertgerät übernimmt dabei bezüglich des analogen Messbus-Protokolls und des digitalen Messbus-Protokolls eine Protokollumsetzungs- bzw. Gateway-Funktion. Außerdem packt es bei einer Mehrzahl angeschlossener analoger Messsensoren die einzelnen bereitgestellten analogen Messparameter zusammen, um sie in einem einzigen digitalen Strom gebündelt zu versenden.

Ein Beispiel für ein digitales Bussystem 106, mit dem das Auswertgerät an dem Kommunikationsmodul 101 angeschlossen werden kann, ist das VEGA Protokoll DISBUS bzw. LOGBUS. Es kann aber jedes bekanntes Messbussystem eingesetzt werden.

Es ist aber auch denkbar, dass das Auswertgerät, zusätzlich zu dem analogen Interface zum Anschluss der analogen Messgeräte, ein Interface zum Anschluss an ein Kommunikationsnetz 302, beispielsweise ein Ethernet Interface, aufweist. Weist das Auswertgerät selbst zusätzlich noch das Kommunikationsmodul auf, so lässt sich das Auswertgerät an die Datenbank anschließen, ohne ein separates Kommunikationsmodul verwenden zu müssen. D.h. das Auswertgerät, insbesondere das darin integrierte Kommunikationsmodul, kann direkt mit der Datenbank kommunizieren.

Das Kommunikationsmodul 101 kann auch in einem modular aufgebauten Messsystem eingesetzt werden. Das Kommunikationsmodul 101 kann dazu beispielsweise als eine Einsteckkarte, die in einen Baugruppenträger einsteckbar ist, ausgebildet sein und innerhalb des Baugruppenträger den Zugriff weiterer Module oder Steckkarten des Baugruppenträgers auf die Datenbank steuern.

Die Messwerte der Sensoren 203 werden in regelmäßigen oder unregelmäßigen Abständen an das Kommunikationsmodul 101 mitgeteilt. Das Vorliegen eines Messwertes bzw. eines neuen Messwertes im Kommunikationsmodul 101 kann ebenso wie der Ablauf eines Zeitgliedes im Kommunikationsmodul 101 als Ereignis genommen werden. Weitere Ereignisse sind das Unter- oder Überschreiten eines bestimmten Messwertes oder eine Störung eines Sensors oder des Kommunikationsmoduls. Jedes Ereignis kann eine Übertragung des Messwertes von dem Kommunikationsmodul 101 an die Datenbank 304 initiieren. Es handelt sich beispielsweise bei dem Kommunikationsmodul 101 um ein VEGAMET System der Fa. VEGA. Ein auf dem Kommunikationsmodul 101 befindlicher Webclient kodiert die über das erste Interface 106 empfangenen Messwerte in eine für die Datenbank 304 lesbare und über das Netzwerk bzw. Kommunikationsmedium 302 übertragbare Form.

Dazu wird beispielsweise von dem Webclient 103 auf dem Kommunikationsmodul 101 eine vorliegende zu übertragende Information in eine URI konforme Syntax zur Übertragung mittels des Hypertext Transfer Protokoll (HTTP) gewandelt. Beispielsweise würde ein Ergebnis eines Messgerätes mit der Seriennummer 12345678, die auf dem Kanal 1 des Messgerätes 203 durchgeführt wurde und am Tag TAG1 den Wert 38 liefert, von der Einheit m zu der Zeit 10:5:21 am 29.07.2005 in die folgende Syntax gewandelt: /vmi/vmi_input.php?sernum=12345678&channel=1&tag=TAG1&val=38&unit=m& date_time=2005-07-29 10:5:21.

Das Kommunikationsmodul 101 würde eine TCP-Verbindung zum Port 80 (http-Port) der Datenbank absetzen und nach Zustandekommen der Verbindung seine Anfrage mit dem http-Header "GET /vmi/vmi_input.php?sernum=12345678&channel=1&tag=TAG1&val=38 &unit=m&date_time=2005-07-29 10:5:21 http/1.0" einleiten. Anstelle von GET sind durchaus auch andere http Übertragungsmethoden wie POST oder HEAD verwendbar.

Dieser Skriptaufruf kann mittels des HTTP Protokolls über das Kommunikationsmedium 302 der Datenbank 304 mitgeteilt werden. An dem physikalischen Interface 303 der Datenbank ist ein Server 305 angeschlossen. Dieser Server kann beispielsweise die Server Familie Apache, PHP und MySQL Server sein oder die Server Familie IIS, SQL, ASP Server. Dabei können die einzelnen Server jeweils eigenständige und verteilte Server sein. Außerdem können je nach Anforderungen beliebige Kombinationen der Server vorkommen.

Auf dem Server 305, der mit der Speichereinrichtung 307 die Datenbank 304 bildet, laufen das Interfaceskript 306 und das Anzeigeskript 308.

Der in dem Kommunikationsmodul 101 oder in einem Feldgerät 101 implementierte Webclient überträgt die Informationen über eine HTTP-Verbindung an den Server 305. Auf diesem Server 305 wird die Information von dem Interfaceskript 306 (beispielsweise einem CGI, PHP oder ASP Skript) entgegengenommen. Die Werte werden dann über die Verbindung 309 in der Speichereinrichtung 307 abgelegt. Somit sind die Werte in der Datenbank 304 gespeichert.

Die Datenbank 304 liegt in dem Kommunikationsnetz 302. Dadurch kann beispielsweise ein Webhosting Provider die Datenbank 304 für das Feldgerät 101 betreiben. Durch die Verteilung des Kommunikationsmodul 101 und der Datenbank 304 ist jedes der Systeme für sich betreibbar. Die Information des Feldgeräts 203 bzw. die Information des Kommunikationsmoduls 101 kann direkt in die Datenbank 304 übertragen werden. Dabei kann das Kommunikationsmodul den Erfolg dieser Übertragung bzw. Aktion überwachen und im Fehlerfall reagieren. Der Fehlerfall wird dem Kommunikationsmodul von der Datenbank 304, insbesondere dem Server 305, über eine fehlerhafte CRC Checksummenrückmeldung mitgeteilt. Bei einem Erkennen eines solchen Fehlers kann das Kommunikationsmodul 101 die Übertragung wiederholen. Im Erfolgsfall erhält das Kommunikationsmodul 101 eine "Done"-Meldung.

Das Skript 306 dient dem Empfang der von dem Kommunikationsmodul 101 ausgesandten Messwerte und der Ablage bzw. Steuerung der Ablage der Messwerte auf der Speichereinrichtung 307.

Um die Werte, insbesondere die Messwerte, abfragen bzw. auswerten zu können, ist über die Verbindung 310 ein Anzeigegerät 311 bzw. eine Anzeigeeinrichtung 311 mit der Datenbank 304 und insbesondere mit dem auf dem Server 305 laufenden Anzeigeskript 308 verbunden. Die Verbindung 310 kann über das gleiche Kommunikationsmedium 302 erfolgen, wie die Verbindung zwischen dem Kommunikationsmodul 101 und der Datenbank 304. Insbesondere können die Anzeigeeinrichtung 311 und die Datenbank 304 über eine direkte Verbindung 310 verbunden sein. Von der Anzeigeeinrichtung 311 kann zur Anzeige beispielsweise mittels eines Webbrowsers das Anzeigeskript 308 auf dem Server initiiert werden und somit ein Auslesen der auf Speichereinrichtung 307 abgelegten Messwerte erfolgen. Mittels Anzeigeskript 308 können die Messwerte beispielsweise in ein bestimmtes Anzeigeformat gewandelt und zur Anzeige gebracht werden.

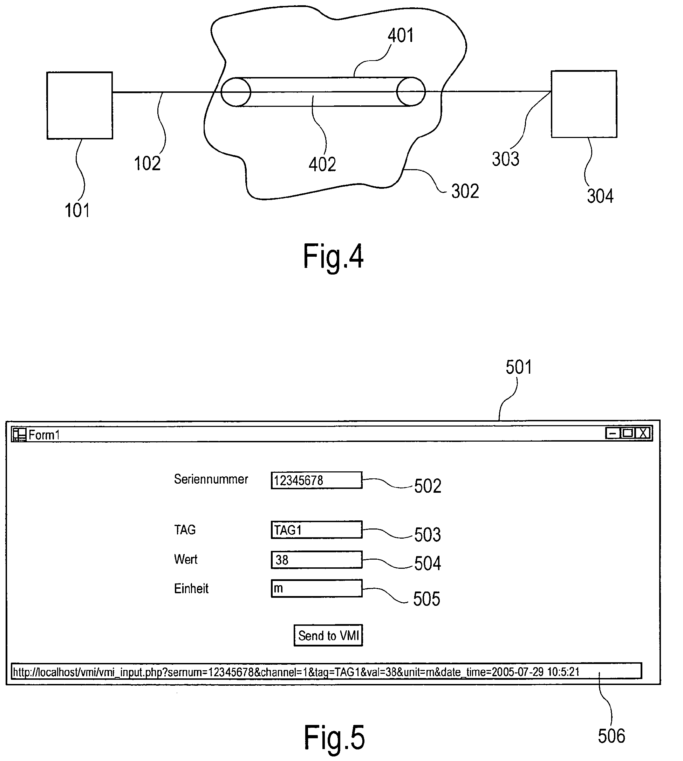

Fig. 4 zeigt eine schematische Darstellung einer Verbindung eines Kommunikationsmoduls 101 mit einer Datenbank 304 gemäß einem Ausführungsbeispiel der vorliegenden Erfindung. Findet als Kommunikationsmedium 302 beispielsweise das Internet oder ein Intranet Anwendung, können sämtliche Schutzmechanismen, die in einem Intranet bzw. Internet zum Schutze einer Datenverbindung zur Verfügung gestellt werden, zum Einsatz kommen. Ein Beispiel für einen Schutzmechanismus in einem Internet bzw. Intranet 302 ist der Einsatz von sog. virtuellen Verbindungen 401 (VPN) oder Tunneln 401. Dabei werden die Eingänge des Kommunikationsnetzes 302, d. h. die Verbindungen mit den Interfacen 102 und 303 in einem virtuellen Kanal 401 als Verbindung 402 weitergeführt.

Innerhalb der Tunnel können die Daten verschlüsselt sein. Der Einsatz eines Standardprotokolls wie HTTP für die Messwertübertragung macht die Übertragung transparent für das Netz 302, wodurch Standard Sicherungsverfahren des Kommunikationsmediums 302 für die Datenverbindungen eingesetzt werden können. Die Datensicherung über einen virtuellen Pfad 401 kann somit ohne Anpassung für die Übertragung der Messwerte von dem Kommunikationsmodul 101 zu der Datenbank 304 benutzt werden.

Fig. 5 zeigt eine Eingabemaske für ein Skriptinterface zur Übertragung von Informationen mittels eines Webclients gemäß einem Ausführungsbeispiel der vorliegenden Erfindung. Dazu ist in Fig. 5 die Eingabemaske 501 gezeichnet. Auf der Eingabemaske 501 können Werte angegeben werden. Diese Werte können zu übertragende Werte sein. Beispielsweise kann es sich um eine Seriennummer 502, z. B. mit dem Wert 12345678, handeln. Ein weiterer Wert kann ein Tag 503 mit dem Wert TAG1 sein. Ein weiterer zu übertragender Wert könnte der Wert 504 mit dem Wert 38 sein und schließlich ist auf der Eingabemaske 501 die Einheit 505 anzugeben, die den Wert m annehmen kann. Daraus wird aus diesen Eingabewerten 502, 503, 504, 505 von dem Webclient die an das Interface 306 angepasste URI (Uniform Resource Identifier) Schreibweise zur Übertragung über HTTP erstellt, die folgendes Format aufweist.

/vmi/vmi_input.php?sernum=12345678&channel=1&tag=TAG1&val=38&unit=m& date_time=2005-07-29 10:5:21.

Die entsprechende Umwandlung der bereitgestellten Werte in das URI Datenformat und die anschließende Kommunikation über http wird von dem Webclient erledigt.

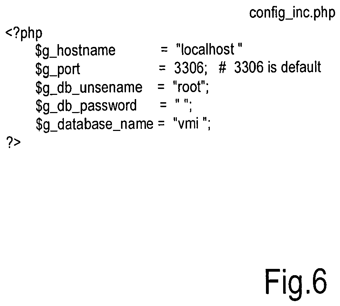

Fig. 6 zeigt ein Initialisierungsskript für ein Skriptfile gemäß einem Ausführungsbeispiel der vorliegenden Erfindung. Zu einer einheitlichen Darstellung können Parameter, die für die Skriptfiles 306 und 308 benötigt werden, zusammengefasst werden und in einem Konfigurationsfile zur Verfügung gestellt werden. Beispielsweise können Variablen $g_hostname, $g_port, $g_db_username, $g_db_passwort und $g_database_name verwendet werden. Damit lassen sich die Variablen beispielsweise mit den Werten $g_hostname="localhost"
$g_port=3306
$g_db_username="root"
$g_db_passwort=""
$g_database_name="vmi"
vorbelegen. Damit stehen die entsprechenden Werte unter den Bezeichnungen den Skriptfiles zur Verfügung.

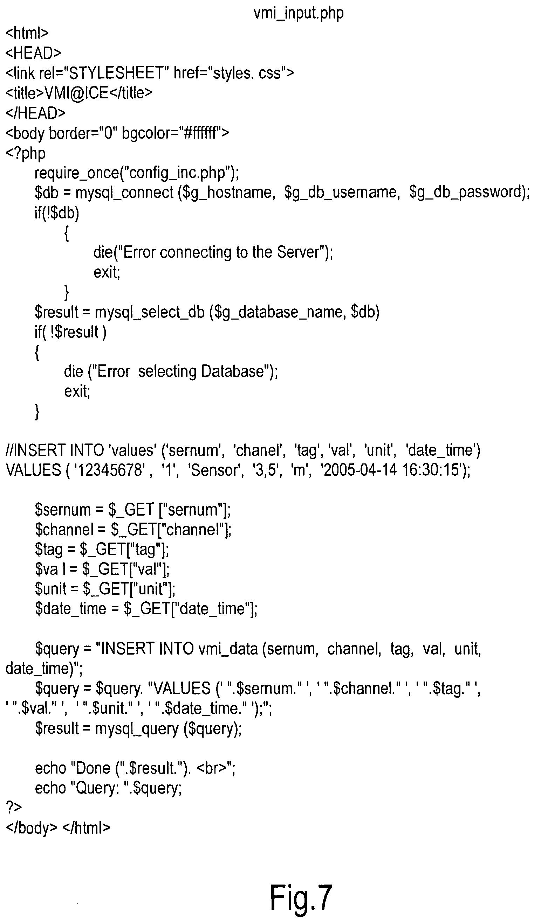

Fig. 7 zeigt ein Datenbankinterface in einer Skript-Sprache gemäß einem Ausführungsbeispiel der vorliegenden Erfindung.

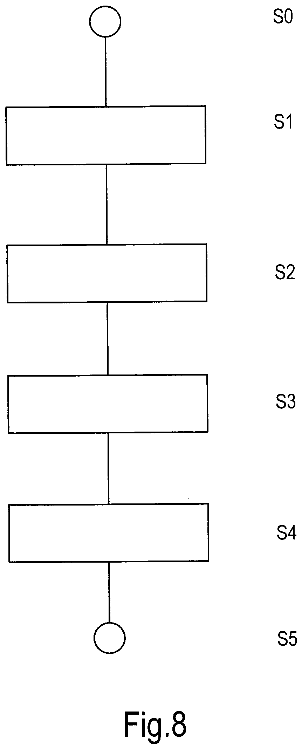

Fig. 8 zeigt das zu Fig. 7 gehörige Flussdiagramm. In Fig. 8 ist zu sehen, dass beginnend in einem Ruhezustand S0 im ersten Schritt S1 eine Initialisierung von gemeinsam genutzten Variablen gemäß dem in Fig. 6 beschriebenen Konfigurationsfile stattfinden. Dadurch werden Parameter in dem Skriptfile geladen.

Im darauf folgenden Schritt S2 wird eine Verbindung zu einer Datenbank geöffnet, wobei gleichzeitig die Verfügbarkeit der Datenbank kontrolliert wird. Nach Öffnung der Verbindung zu der Datenbank wird im Schritt S3 eine Nachricht von einem Webclient empfangen und die Messwerte bzw. weitere Informationswerte werden aus dem empfangenen Skriptfile bzw. dem zusammengesetzten Adressfile extrahiert.

Im nächsten Schritt S4 werden die extrahierten Werte in vorher bestimmte Plätze der Speichereinrichtung 307 der Datenbank 304 zur Verfügung gestellt. Nachdem die Werte im Schritt S4 in der Datenbank abgelegt wurden, kehrt der Prozess der Fig. 8 in den Ruhezustand S5 zurück.

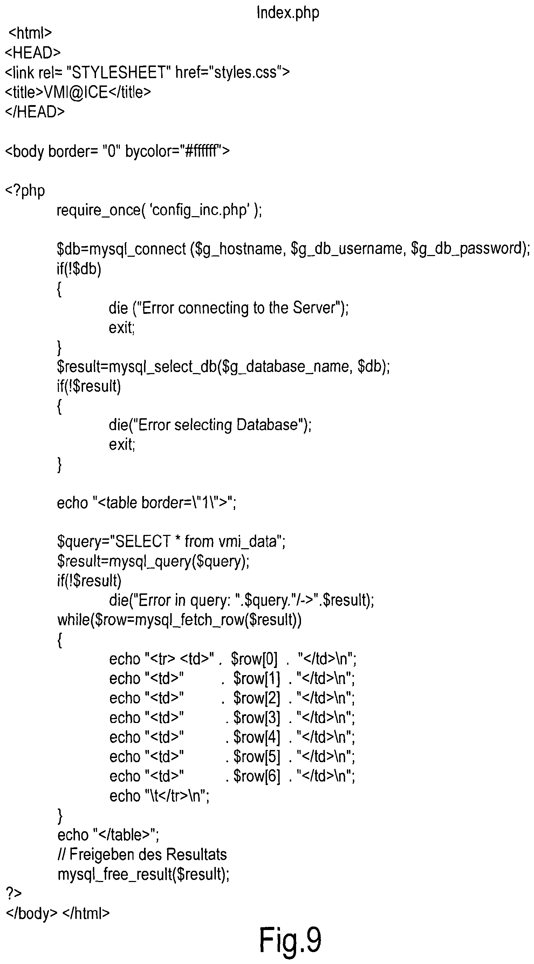

Fig. 9 zeigt ein Skript zur Abfrage einer Datenbank gemäß einem Ausführungsbeispiel der vorliegenden Erfindung.

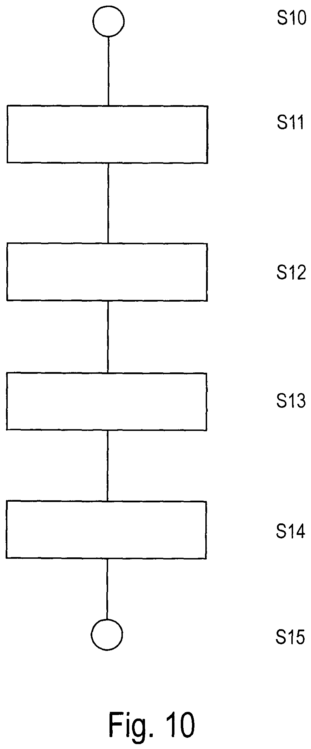

Fig. 10 zeigt das zu Fig. 9 gehörige Flussdiagramm. Aus Fig. 10 ist zu entnehmen, dass von einem Ruhezustand S10 ausgehend in dem Schritt S11 ebenfalls mittels des Konfigurationsfiles aus Fig. 6 eine Initialisierung von Parametern stattfindet. Nach dieser Initialisierung kann in Schritt S12 die Verbindung mit der Datenbank 304, insbesondere mit der Speichereinrichtung 307 der Datenbank, aufgebaut werden. Gleichzeitig findet im Schritt S12 eine Überprüfung des Vorhandenseins der Datenbank statt.

Im Schritt S13 werden die gewünschten Informationen aus der Datenbank 304 ausgelesen und im Schritt 14 werden die ausgelesenen Informationen, beispielsweise die Messwerte bzw. Zeitpunkte von Messwerten, in einer in dem Skript definierten Art und Weise dargestellt. Nach Auslesen und Darstellen der Messwerte in Schritt S 14 kehrt das Programm in den Ruhezustand S15 zurück.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Das Kommunikationsmodul und die Datenbank wurden in Bezug auf ein Druckmessgerät und ein Füllstandsmessgerät beschrieben. Für den Fachmann ist offensichtlich, dass sich die Beschreibung allgemein auf Messgeräte bezieht. Weitere Beispiele für Messgeräte sind Temperaturmessgeräte, Durchflussmessgeräte oder Gasmessgeräte.

## Patentansprüche

1. Messwerterfassungssystem, aufweisend:
mindestens eine Datenbank (304); und
eine Messgeräteanordnung mit einem Messgerät (203) zum Erfassen mindestens eines Messwertes undeinem Kommunikationsmodul (101),
wobei das Kommunikationsmodul (101) ein erstes Interface (106); ein zweites Interface (102) und einen Webclient (103) aufweist;
wobei das erste Interface (106) an das Messgerät (203) angeschlossen ist, so dass an dem ersten Interface (106) der mindestens eine Messwert dem Kommunikationsmodul (101) zuführbar ist;
wobei das zweite Interface (102) an die Datenbank (304) angeschlossen ist;
wobei der Webclient (103) eingerichtet ist, einen über das erste Interface (106) empfangenen Messwert und weitere mit der Messung in Verbindung stehende Informationen in eine Anfrage mit einem http-header zu kodieren;
wobei die weiteren Informationen eine Adressenidentifikationsnummer des Messgerätes, eine Uhrzeit der Messung oder die Dauer der Messung umfassen;
wobei das Kommunikationsmodul (101) ausgebildet ist, den kodierten Messwert und die weiteren Informationen mittels des Webclients (103) über das zweite Interface (102) der Datenbank (304) bereitzustellen und in die Datenbank (304) zu übertragen; und
wobei das Messgerät (203) ein Füllstandmessgerät oder ein Druckmessgerät ist.

2. Messwerterfassungssystem nach Anspruch 1,
wobei das erste Interface (106) ein Messgerät-internes Interface ist.

3. Messwerterfassungssystem nach Anspruch 1,
wobei das erste Interface (106) ausgewählt ist aus der Gruppe bestehend aus I²C, HART®, Profibus, Fieldbus Foundation™ und VEGA VBUS ist.

4. Messwerterfassungssystem nach einem der Ansprüche 1 bis 3,
wobei das zweite Interface (102) in einer Skript-Sprache verfasst ist.

5. Messwerterfassungssystem nach einem der Ansprüche 1 bis 4,
wobei das Kommunikationsmodul (101) an die Datenbank (304) über mindestens ein Kommunikationsmedium (302) ausgewählt aus der Gruppe bestehend aus Internet, Telefonnetz und Direkt Verbindung anschließbar ist.

6. Messwerterfassungssystem nach einem der Ansprüche 1 bis 5,
wobei das Kommunikationsmodul (101) ausgebildet ist, den Messwert ereignisgesteuert weiterzuleiten.

7. Messwerterfassungssystem nach einem der Ansprüche 1 bis 6,
wobei der Webclient (103) als Softwaremodul ausgestaltet ist.

8. Messwerterfassungssystem nach einem der voranstehenden Ansprüche
wobei die Datenbank (304) ein Interface (303) und einen Server (305) aufweist;
wobei die Datenbank (304) an das Kommunikationsmodul (101) der Messgeräteanordnung angeschlossen ist;
wobei das Interface (303) an das einen Webclient (103) aufweisende Kommunikationsmodul (101) angeschlossen ist,
wobei die Datenbank (304) ausgebildet ist, den von dem Kommunikationsmodul (101) in eine Anfrage mit einem http-header kodierten versendeten Messwert zu empfangen; und
wobei das Messwerterfassungssystem (301) derart ausgebildet ist, dass das Kommunikationsmodul (101) der Datenbank mittels des Webclients (103) Messwerte bereitstellt.

9. Messwerterfassungssystem nach einem der voranstehenden Ansprüche, die Datenbank (304) ferner aufweisend:
eine Anzeigeeinrichtung (311);
wobei die Anzeigeeinrichtung (311) ausgebildet ist, den Messwert anzuzeigen.

10. Messwerterfassungssystem nach einem der voranstehenden Ansprüche, wobei das Interface (303) in einer Skript-Sprache verfasst ist.

11. Messwerterfassungssystem nach einem der voranstehenden Ansprüche,
wobei die Datenbank (304) an dem Kommunikationsmodul (101) über ein Kommunikationsmedium (302) ausgewählt aus der Gruppe bestehend aus Internet, Telefonnetz und Direkt Verbindung anschließbar ist.

12. Verfahren zur Verarbeitung von Messwerten mittels eines Kommunikationsmoduls, wobei das Verfahren aufweist:
Erfassen eines Messwertes mit einem Messgerät;
Empfangen des Messwerts an mindestens einem ersten Interface des Kommunikationsmoduls (101), welches einen Webclient (103) aufweist;
Kodieren, mit dem Webclient (103), des über das erste Interface empfangenen Messwertes und weiterer mit der Messung in Verbindung stehender Informationen in eine Anfrage mit einem http-header;
wobei die weiteren Informationen eine Adressenidentifikationsnummer des Messgerätes, eine Uhrzeit der Messung oder die Dauer der Messung umfassen;
Weiterleiten des kodierten Messwertes mittels des Webclients an mindestens ein zweites Interface des Kommunikationsmoduls; und
Übertragen des Messwerts und der weiteren Informationen mittels des Webclients (103) über das zweite Interface (102) in die Datenbank (304);
wobei das Messgerät ein Füllstandmessgerät oder ein Druckmessgerät ist.

## Claims

1. A measuring value acquisition system, comprising:
at least one database (304); and
a measuring device arrangement with a measuring device (203) for determining at least one measurement value and with a communication module (101),
wherein the communication module (101) comprises a first interface (106), a second interface (102), and a web client (103);
wherein the first interface (106) is connected to the measuring device (203) so that the at least one measurement value is suppliable to the communication module (101) at the first interface (106);
wherein the second interface (102) is connected to the database (304);
wherein the web client (103) is configured to code a measurement value received via the first interface (106) and further information associated with the measurement into a request with an HTTP header;
wherein the further information comprises an address identification number of the measuring device, a time of the measurement, or a duration of the measurement;
wherein the communication module (101) is configured to provide the coded measurement value and the further information by means of the web client (103) via the second interface (102) to the database (304) and to transfer it to the database (304); and
wherein the measuring device (203) is a level measuring device or a pressure measuring device.

2. The measuring value acquisition system according to claim 1,
wherein the first interface (106) is an internal interface of the measuring device.

3. The measuring value acquisition system according to claim 1, wherein the first interface (106) is selected from the group consisting of I²C, HART®, Profibus, Fieldbus Foundation™, and VEGA VBUS.

4. The measuring value acquisition system according to any of claims 1 to 3,
wherein the second interface (102) is written in a script language.

5. The measuring value acquisition system according to any of claims 1 to 4,
wherein the communication module (101) is connectable to the database (304) via at least one communication medium (302) selected from the group consisting of the internet, a telephone network, and a direct link.

6. The measuring value acquisition system according to any of claims 1 to 5,
wherein the communication module (101) is configured to forward the measurement value in an event driven way.

7. The measuring value acquisition system according to any of claims 1 to 6,
wherein the web client is designed as a software module.

8. The measuring value acquisition system according to any of the preceding claims, wherein the database (304) comprises an interface (303) and a server (305);
wherein the database (304) is connected to the communication module (101) of the measuring device arrangement;
wherein the interface (303) is connected to the communication module (101) having a web client (103),
wherein the database (304) is configured to receive the transmitted measurement value encoded by the communication module (101) into a request with an http header; and
wherein the measuring value acquisition system (301) is configured such that the communication module (101) of the database provides measurement values by means of the web client (103).

9. The measuring value acquisition system according to any of the preceding claims, the database (304) further comprising:
a display device (311);
wherein the display device (311) is configured to display the measurement value.

10. The measuring value acquisition system according to any of the preceding claims,
wherein the interface (303) is written in a script language.

11. The measuring value acquisition system according to any of the preceding claims,
wherein the database (304) is connectable to the communication module (101) via a communication medium (302) selected from the group consisting of the internet, a telephone network, and a direct link.

12. A method for processing measurement values by means of a communication module, wherein the method comprises:
acquiring a measurement value with a measuring device;
receiving the measurement value at at least a first interface of a communication module (101) comprising a web client (103);
coding, with the web client (103), the measurement value received via the first interface and further information associated with the measurement into a request with an http header;
wherein the further information comprises an address identification number of the measuring device, a time of the measurement, or a duration of the measurement;
forwarding the coded measurement value to at least a second interface of the communication module by means of the web client; and
transmitting the measurement value and the further information by means of the web client (103) via the second interface (102) into the database (304);
wherein the measuring device is a level measuring device or a pressure measuring device.

## Revendications

1. Système de saisie de valeurs de mesure, comportant :
au moins une banque de données (304) ; et
un arrangement d'appareils de mesure doté d'un appareil de mesure (203) pour saisir au moins une valeur de mesure et d'un module de communication (101),
dans lequel le module de communication comporte une première interface (106) ; une deuxième interface (102) et un client Web (103) ;
dans lequel la première interface (106) est connectée à l'appareil de mesure (203) de sorte que l'au moins une valeur de mesure peut alimenter le module de communication (101) à la première interface (106) ;
dans lequel la deuxième interface (102) est connectée à la banque de données (304) ;
dans lequel le client Web (103) est agencé afin de coder une valeur de mesure reçue par le biais de la première interface (106) et des informations supplémentaires en rapport avec la mesure en une requête dotée d'un en-tête http ;
dans lequel les informations supplémentaires comprennent un numéro identifiant d'adresse de l'appareil de mesure, une heure de mesure ou la durée de la mesure ;
dans lequel le module de communication est disposé pour préparer la valeur de mesure codée et les informations supplémentaires au moyen du client Web (103) par le biais de la deuxième interface (102) de la banque de données (304) et les transférer dans la banque de données (304) ; et
dans lequel l'appareil de mesure (203) est une jauge de remplissage ou un manomètre.

2. Système de saisie de valeurs de mesure selon la revendication 1,
dans lequel la première interface (106) est une interface interne à l'appareil de mesure.

3. Système de saisie de valeurs de mesure selon la revendication 1,
dans lequel la première interface (106) est sélectionné parmi le groupe constitué par I²C, HART®, Profibus, Fieldbus Foundation™ et VEGA VBUS.

4. Système de saisie de valeurs de mesure selon l'une des revendications 1 à 3,
dans lequel la deuxième interface (102) est rédigée dans un langage script.

5. Système de saisie de valeurs de mesure selon l'une des revendications 1 à 4,
dans lequel le module de communication (101) est connectable à la banque de données (304) par le biais d'au moins un moyen de communication (302) sélectionné parmi le groupe constitué par Internet, le réseau téléphonique et la connexion directe.

6. Système de saisie de valeurs de mesure selon l'une des revendications 1 à 5,
dans lequel le module de communication (101) est disposé pour retransmettre la valeur de mesure sur événement.

7. Système de saisie de valeurs de mesure selon l'une des revendications 1 à 6,
dans lequel le client Web (103) est conçu comme module logiciel.

8. Système de saisie de valeurs de mesure selon l'une des revendications précédentes dans lequel la banque de données (304) comporte une interface (303) et un serveur (305) ;
dans lequel la banque de données (304) est connectée au module de communication (101) de l'arrangement d'appareils de mesure ;
dans lequel l'interface (303) est connectée au module de communication (101) comportant un client Web (103),
dans lequel la banque de données (304) est disposée pour recevoir la valeur de mesure envoyée dans une requête codée avec un en-tête http depuis le module de communication (101) ; et
dans lequel le système de saisie de valeurs de mesure (301) est disposé telle sorte que le module de communication (101) de la banque de données prépare les valeurs de mesure au moyen du client Web.

9. Système de saisie de valeurs de mesure selon l'une des revendications précédentes, la banque de données (304) comportant en outre :
un dispositif d'affichage (311) ;
dans lequel le dispositif d'affichage (311) est disposé pour afficher la valeur de mesure.

10. Système de saisie de valeurs de mesure selon l'une des revendications précédentes,
dans lequel l'interface (303) est rédigée dans un langage script.

11. Système de saisie de valeurs de mesure selon l'une des revendications précédentes,
dans lequel la banque de données (304) est connectable au module de communication (101) par le biais d'un moyen de communication (302) sélectionné parmi le groupe constitué par Internet, le réseau téléphonique et la connexion directe.

12. Procédé de traitement de valeurs de mesure au moyen d'un module de communication, dans lequel le procédé comporte :
saisie d'une valeur de mesure avec un appareil de mesure ;
réception de la valeur de mesure sur au moins une première interface du module de communication (101), lequel comporte un client Web (103) ;
codage en une requête dotée d'un en-tête http, avec le client Web (103), de la valeur de mesure reçue par le biais de la première interface et d'informations supplémentaires en rapport avec la mesure ;
dans lequel les informations supplémentaires comprennent un numéro identifiant d'adresse de l'appareil de mesure, une heure de mesure ou la durée de la mesure ;
retransmission de la valeur de mesure codée au moyen du client Web à au moins une deuxième interface du module de communication ; et
transfert de la valeur de mesure et des informations supplémentaires au moyen du client Web (103) dans la banque de données (304) par le biais de la deuxième interface (102) ;
dans lequel l'appareil de mesure est une jauge de remplissage ou un manomètre.
